(19) **Europäisches Patentamt / European Patent Office / Office européen des brevets**

(11) **EP 2 751 666 B1**

(12) **EUROPEAN PATENT SPECIFICATION**

(45) Date of publication and mention of the grant of the patent:
**11.03.2020 Bulletin 2020/11**

(21) Application number: **12828481.7**

(22) Date of filing: **30.08.2012**

(51) Int Cl.:
*G06F 8/65* (2018.01)  *G06F 9/52* (2006.01)

(86) International application number:
**PCT/KR2012/006917**

(87) International publication number:
**WO 2013/032237 (07.03.2013 Gazette 2013/10)**

(54) **TERMINAL AND APPLICATION MANAGEMENT METHOD THEREOF**

ENDGERÄT UND ANWENDUNGSVERWALTUNGSVERFAHREN DAFÜR

TERMINAL ET SON PROCÉDÉ DE GESTION D'APPLICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2011 KR 20110087253**
**27.08.2012 KR 20120093565**

(43) Date of publication of application:
**09.07.2014 Bulletin 2014/28**

(73) Proprietor: **Samsung Electronics Co., Ltd.**
**Suwon-si, Gyeonggi-do, 443-742 (KR)**

(72) Inventors:
- **HONG, Young Ki**
  **Seoul 152-102 (KR)**
- **KIM, Kill Yeon**
  **Suwon-si**
  **Gyeonggi-do 443-470 (KR)**
- **KANG, Hyeon Jin**
  **Seoul 137-072 (KR)**
- **KWEON, Ki Suk**
  **Suwon-si**
  **Gyeonggi-do 441-400 (KR)**
- **PARK, Yong Seok**
  **Seoul 135-282 (KR)**

(74) Representative: **Nederlandsch Octrooibureau**
**P.O. Box 29720**
**2502 LS The Hague (NL)**

(56) References cited:
**EP-A1- 2 154 922      WO-A2-2010/022945**
**KR-B1- 100 999 807      US-A1- 2002 129 107**
**US-A1- 2003 153 368      US-A1- 2006 106 806**
**US-A1- 2011 161 963      US-A1- 2011 234 427**

- **LI, L. ET AL.: 'A precision adaptive average time synchronization protocol in wireless sensor networks' 2008 IEEE INTERNATIONAL CONFERENCE ON INFO RMATION AND AUTOMATION 20 June 2008, pages 65 - 70, XP031313159**

**Description**

[Technical Field]

The present invention relates generally to a terminal and method for managing application data in the terminal, and in particular, to a terminal and method for simultaneously updating multiple applications.

[Background Art]

Mobile terminals, such as smartphones, run various applications such as email, Social Network Services (SNSs), and Instant Messaging (IM) applications. Such applications are capable of synchronizing application data through a network. Generally, each application operates with a data synchronization period set to an appropriate value. Typically the synchronization period can be set to a time value such as every 5 minutes, 15 minutes, 30 minutes, 1 hour, 4 hours, etc. When configuring the application update period, a user who wants to receive real time data updates in sets the synchronization period to a short time value.

Accordingly, the terminal requests the network for updated data at the synchronization period of the corresponding application. In response to the request, the network transmits the requested data to the terminal.

Whenever each of the individual applications performs update, the terminal transitions from the idle mode to the active mode. Accordingly, if the multiple applications have different synchronization periods, the terminal will transition from the idle mode to the active mode more frequently.

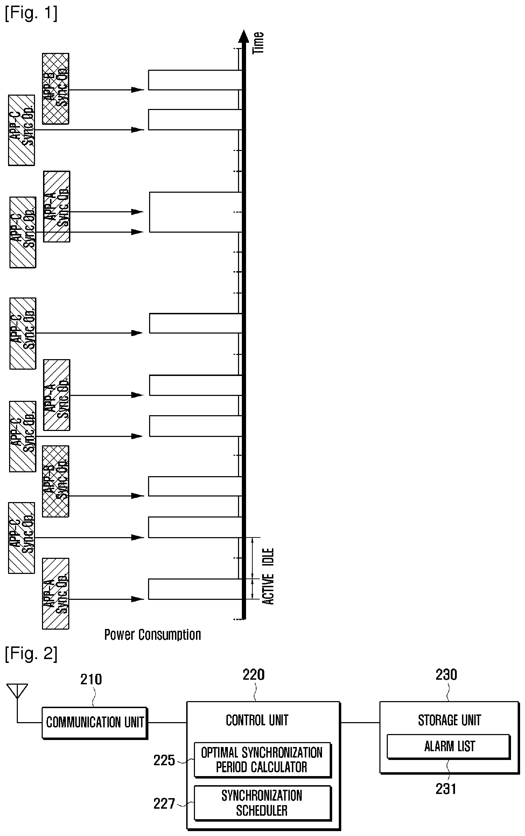

FIG. 1 is a diagram illustrating state transition from the idle mode for power saving to the active mode for application update in a conventional terminal.

Referring to FIG. 1, the applications A, B, and C have different synchronization periods, and thus, the terminal wakes up from the power saving mode frequently, thereby shortening the power saving duration. Consequently, the frequent transitions from the idle mode to the active mode increase signaling, thereby increasing power consumption.

US 2011/234427 A1 discloses telemetric device for a vehicle includes a location determining device arranged to determine the vehicle's location and a transmitting device arranged to continuously or nearly continuously transmit location data concerning the vehicle in real-time or near real-time. The transmission of the location data is not based on a condition of the vehicle and is without prompting by a user.

EP 2 154 922 A1 discloses to overcome the shortcomings of the prior art by providing a power saving method of a portable Internet device, the portable Internet device and the instant messaging system to prevent unnecessary power consumption of the portable Internet device. First, a display unit of the portable Internet device is monitored, and if the display unit is in a view state, an instant messaging program is driven to enter to a first mode; and if the display unit is in a non-view state, the instant messaging program is driven to enter to a second mode, wherein the message update frequency of the instant messaging program in the second mode is lower than message update frequency of the instant messaging program in the first mode.

US 2011/161963 A1 discloses to utilize the bus transfer time to determine whether scheduling or assignments of the algorithms to one or more processing elements may be guaranteed using a mechanism utilized by the scheduler to combine the periods of multiple radios.

WO 2010/022945 A2 discloses best performance can be achieved when the execution times of several periodic processes are spread as far as possible. To this end the present invention proposes to schedule an additional process in such a way that the minimum time lag between the execution times of the additional process and the execution times of the already scheduled processes is maximized. Maximizing the time lag between the execution times of different processes is beneficial in many environments.

US 2003/153368 A1 discloses at the end of a wake-up event, the operating system reviews all raw event times and executes any event whose raw event time has passed by in order of priority. As a result, the grouping together of tasks to avoid repeated powering down and powering up operations, thereby conserving current drain during those powering down and powering up operations.

[Disclosure of Invention]

[Technical Problem]

Accordingly, the present invention is designed to address at least the problems and/or disadvantages described above and to provide at least the advantages described below.

An aspect of the present invention is to provide a method and apparatus for efficiently controlling data update periods of applications running on a terminal.

[Solution to Problem]

The invention is defined by the independent claims. The dependent claims define advantageous embodiments. In accordance with an aspect of the present invention, an application synchronization method of a terminal is provided, which includes acquiring a synchronization timing of a previously registered synchronization target application or a common synchronization timing of previously registered synchronization target applications, when an application to be synchronized is added; and adjusting the synchronization timing of the added application in consideration of the previous synchronization timing or the common synchronization timing.

In accordance with another aspect of the present invention, a terminal for performing application synchronization is provided. The terminal includes a memory; and a controller that acquires a synchronization timing of a previously registered synchronization target application or a common synchronization timing of previously registered synchronization target applications from the memory, when an application to be synchronized is added, and adjusts the synchronization timing of the added application in consideration of the previous synchronization timing or the common synchronization timing.

[Brief Description of Drawings]

The above and other aspects, features, and advantages of certain embodiments of the present invention will be more apparent from the following detailed description taken in conjunction with the accompanying drawings, in which:

FIG. 1 is a diagram illustrating state transition from an idle mode for power saving to an active mode for an application update in a conventional terminal;
FIG. 2 is a block diagram illustrating a terminal according to an embodiment of the present invention;
FIG. 3 is a diagram illustrating an Operating System (OS) configuration of a control unit for synchronizing between applications according to an embodiment of the present invention;
FIG. 4 is a diagram illustrating an alarm list for use in an application management method according to an embodiment of the present invention;
FIG. 5 is a diagram illustrating a first location of a scheduler on an OS layer of a control unit of a terminal according to an embodiment of the present invention;
FIG. 6 is a diagram illustrating a second location of a scheduler on an OS layer of a control unit of a terminal according to an embodiment of the present invention;
FIG. 7 is a flowchart illustrating an application management method according to an embodiment of the present invention;
FIG. 8 is a flowchart illustrating a scheduling synchronization period calculation procedure of an application management method according to an embodiment of the present invention;
FIG. 9 is a flowchart illustrating a procedure for application synchronization period configuration of an application management method according to an embodiment of the present invention;
FIG. 10 is a diagram illustrating a principle of an update based on a scheduling synchronization period configured per application according to an embodiment of the present invention;
FIGs. 11A to 11C are diagrams illustrating an application synchronization procedure according to an embodiment of the present invention;
FIG. 12 is a flowchart illustrating a synchronization configuration procedure of an application management method according to an embodiment of the present invention; and
FIG. 13 is a flowchart illustrating a synchronization configuration procedure of an application management method according to an embodiment of the present invention.

[Mode for the Invention]

Various embodiments of the present invention will now be described in detail with reference to the accompanying drawings. In the following description, specific details such as detailed configuration and components are merely provided to assist the overall understanding of these embodiments of the present invention. Therefore, it should be apparent to those skilled in the art that various changes and modifications of the embodiments described herein can be made without departing from the scope and spirit of the present invention. In addition, descriptions of well-known functions and constructions are omitted for clarity and conciseness.

In the following description, the term "terminal" denotes an information processing device capable of generating data and processing data received from an outside source. For example, the terminal can be any of a desktop computer, a laptop computer, a tablet Personal Computer (PC), a portable terminal, a smartphone, etc.

FIG. 2 is a block diagram illustrating a terminal according to an embodiment of the present invention.

Referring to FIG. 2, the terminal includes a communication unit 210, a control unit 220, and a storage unit 230. The communication unit 210 communicates data with an external entity under the control of the control unit 220. For example, the communication unit 210 establishes a communication channel with a base station for data communication, such as text and image transfer, and voice and video communications. Accordingly, the communication unit 210 includes a Radio Frequency (RF) transmitter (not shown) for up-converting and amplifying a signal to be transmitted and an RF receiver (not shown) for low noise amplifying and down-converting a received signal. The communication unit 210 exchanges data with the network at an update period under the control of the control unit 220. The communication unit 201 transmits a message to request the network interoperating with the application to be updated under the control of the control unit 220.

Herein, synchronizing an application includes exchanging messages for maintaining a connection (e.g., a keep-alive message) and transmitting and receiving changed data to and from an external entity.

The control unit 220 controls conditions and operations of all components of the terminal. Particularly, in accordance with an embodiment of the present invention, the control unit 220 synchronizes the update periods of the applications requiring periodic data updates from among the applications running on the terminal.

The control unit 220 first determines whether a synchronization period should be set. That is, the control unit 220 determines whether a synchronization period configuration mode is selected. The application synchronization period configuration mode is for registering an application for which data is updated periodically or for changing the update period in the settings of an already installed application.

For example, applications requiring periodic updates are those which user profile information of the data received from a counterpart through a network should be updated periodically, such as email and organizer applications. SNS applications also operate better with more periodic updates.

If the application synchronization configuration mode is selected, i.e., if the synchronization period of an application is to be set or changed, the control unit 220 synchronizes the update period of the application with the update periods of other applications using an optimal synchronization period calculator 225 and an synchronization scheduler 227.

Alternatively, the control unit 220 is capable of scheduling the application update period of the corresponding application at installation or activation time or at a separately designated time.

The optimal synchronization period calculator 225 checks an update period selected by the user. The optimal synchronization period calculator 225 checks a predetermined synchronization update period according to the update periods of all of the other applications running on the terminal. That is, if the application synchronization period configuration mode is enabled, the optimal synchronization period calculator 225 calculates the scheduling synchronization period based on the other applications.

The optimal synchronization period generator 225 calculates the update period of the application registered and a greatest common divisor of the previously stored synchronization update periods. The synchronization update period is the synchronized update period of the applications that can be run on the current terminal. Whenever a period update is registered for an application, the optimal synchronization period calculator 225 compares the synchronization update period and the update periods of the previously registered applications to calculate the greatest common divisor.

For example, when update periods of the applications A and B are $T_a$ and $T_b$, respectively, the greatest common divisor ($T_{gcd}$) of the update periods of the applications is calculated by Math Figure 1.

【Math Figure 1】

$$T_{\mathrm{gcd}} = \mathrm{gcd}(T_a, T_b)$$

After determining the synchronization update period with the greatest common divisor, if the update period ($T_x$) of a new application is added, the greatest common divisor is calculated by Math Figure 2.

【Math Figure 2】

$$T_{\mathrm{gcd}} = \mathrm{gcd}(T_{gcd\_old}, T_x)$$

In Math Figure 2, $T_x$ denotes the update period of the newly added application and $T_{gcd\_old}$ denotes the stored synchronization update period.

The synchronization scheduler 227 adjusts the update period of the application selected for registration using the greatest common divisor calculated by the optimal synchronization period calculator 225. The synchronization scheduler 227 schedules the update period according to the calculated scheduling synchronization period.

The synchronization scheduler 227 first determines whether the update period of the application selected to be registered and the previously stored synchronization update period are relatively prime. If the update period of the application selected to be registered and the previously stored synchronization update period are relatively prime, the synchronization scheduler 227 sets the minimum value of the application selected for registration and the previously stored synchronization update period as a basic synchronization unit.

For example, when the update period of the application selected for registration is 6 minutes and the previously stored synchronization update period is 7 minutes, the greatest common divisor of the update period of the application selected for registration and the previously stored synchronization update period is 1. Accordingly, the update period of the application selected to be registered and the previously stored synchronization update period are relatively prime. In this case, the synchronization scheduler 227 sets the basic synchronization unit to 6 minutes as the minimum value of the update period of the application selected to be registered and the previously stored synchronization update period. This basic synchronization unit is then stored in the storage unit 230 as the new synchronization update period.

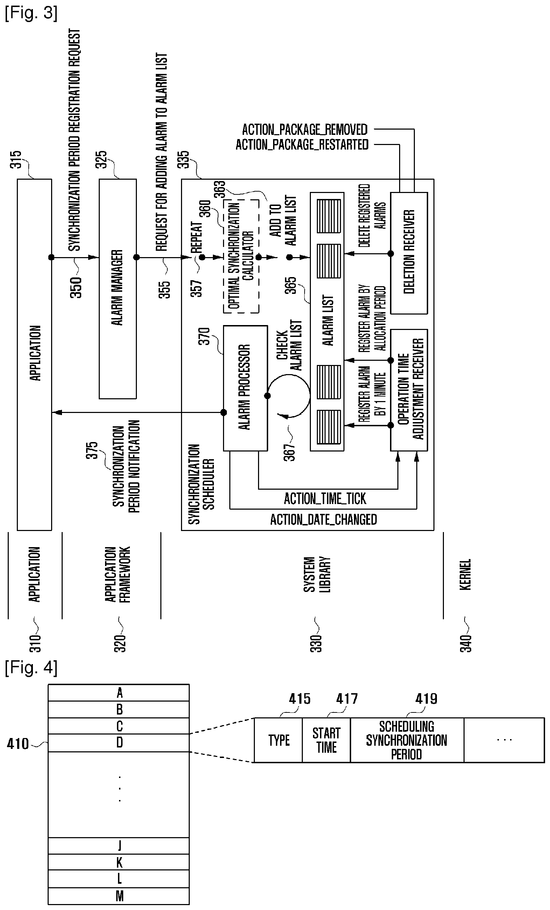

After setting the basic synchronization unit, the synchronization scheduler 227 determines whether the update period of the application selected for registration is greater than the previously stored synchronization update period. If the update period of the application selected for registration is greater than the previously stored synchronization update period and the two values are relatively prime, the synchronization scheduler 227 selects the multiple nearest to the update period, among the multiples of the basic synchronization unit, as the scheduling synchronization period. That is, the synchronization scheduler 227 selects the scheduling synchronization period using Math Figure 3

【Math Figure 3】

$$T_{x'} = \text{Nearest value between } \left[ \frac{T_x}{T_{gcd\_old}} \right] * T_{gcd\_old} \text{ and } \left[ \frac{T_x}{T_{gcd\_old}} \right] * T_{gcd\_old}$$

In Math Figure 3, $T_x$ denotes the scheduling synchronization period of the currently selected application. If the update period of the current application ($T_x$) is greater than the stored synchronization update period ($T_{gcd\_old}$), $T_x$ is changed for a value nearest to the $T_x$ among the multiples of $T_{gcd\_old}$.

However, if the update period of the application selected for registration is less than or equal to the previously stored synchronization update period, the synchronization scheduler 227 changes the synchronization update period by referencing the configured basic synchronization unit to set the scheduling synchronization periods of other applications, using Math Figure 4.

【Math Figure 4】

$$T_{gcd\_old'} = \text{Nearest value between } \left[ \frac{T_{gcd\_old}}{T_x} \right] * T_x \text{ and } \left[ \frac{T_{gcd\_old}}{T_x} \right] * T_x$$

In Equation (4), $T_{gcd\_old}$ is the synchronization period newly calculated for the other applications. If the update period ($T_x$) of the current application is equal to or less than the stored synchronization period ($T_{gcd\_old}$) and the two values are relatively prime, the basic synchronization unit is set to $T_x$, i.e., the update period of the current application, as the minimum value. Accordingly, the periods of other synchronized applications are changed according to the newly configured basic synchronization unit. The $T_{gcd\_old}$ is changed for the value nearest to the $T_{gcd\_old}$ among the multiples of $T_x$.

If the update period of the application selected for registration and the previously stored synchronization update period are not relatively prime, the synchronization scheduler 227 sets the calculated greatest common divisor as the basic synchronization unit. The basic synchronization unit configured above is stored in the storage unit 230 as the new synchronization update period. At this time, the synchronization scheduler 227 determines whether the update period of the application selected for registration is greater than the previously stored synchronization update period. If the update period of the application selected for registration is greater than the previously stored synchronization update period, the synchronization scheduler 227 sets the multiple nearest to the update period among the basic synchronization unit, i.e., the greatest common divisor, as the new scheduling synchronization period.

However, if the update period of the application selected for registration is less than or equal to the previously stored synchronization update period, the synchronization scheduler 227 selects the basic synchronization unit, i.e., the greatest common divisor, as a new scheduling synchronization period.

The synchronization scheduler 227 changes the start time of the initial update of the application to be registered corresponding to the scheduling synchronization periods of other applications. That is, the synchronization scheduler 227 schedules such that the initial start time of the update period of the application equals the updates of the other applications.

Although FIG. 2 illustrates the optimal synchronization period calculator 225 and the synchronization scheduler 227 as separate devices, the present invention is not limited thereto. For example, the optimal synchronization period calculator 225 and the synchronization scheduler 227 can be incorporated in to a single device.

The control unit 220 controls such that the scheduling synchronization period and the synchronization update period as the basic synchronization unit that are configured per application by the optimal synchronization period calculator 225 and the synchronization scheduler 227 are stored in the storage unit 230.

If the update period of an application is alarmed by the synchronization scheduler 227, the control unit 220 updates the corresponding application. That is, the control unit 220 checks at least one application of which scheduling synchronization period is updated according to the scheduling synchronization period and updates the at least one application.

The storage unit 230 stores various data processed in the terminal and programs for functional operation of the terminal. Additionally, the storage unit 230 stores an alarm list 231 under the control of the control unit 220. The alarm list 231 includes the information on the scheduling synchronization period per application. The scheduling synchronization period is configured when registering an application and changing the update period of the corresponding application using the synchronized update period of all applications and update period of the application to be registered. The storage unit 230 stores the synchronization update period as the basic synchronization unit under the control of the control unit 220.

Although not illustrated in FIG. 2, the terminal includes other components depending on the functions of the terminal. For example, the terminal includes at least one of display unit for displaying data according to the operation of the terminal, an input unit for generating signal corresponding to the user input to the control unit 220, a camera unit for taking picture, a digital broadcast module for receiving the digital broadcast data, an audio processing unit for processing audio data, etc.

As described above, a terminal in accordance with an embodiment of the present invention is capable of setting update periods of multiple applications to a value. Consequently, the terminal can simultaneously update a plurality of applications simultaneously according of the configured update period, thereby reducing power consumption.

FIG. 3 is a diagram illustrating an OS configuration of a control unit for synchronizing between applications according to an embodiment of the present invention.

Referring to FIG. 3, the OS of the control unit includes an application layer 310, an application framework 320, a system library 330, and a kernel 340.

The application layer 310 runs an application 315. The application framework layer 320 is a set of classes and libraries for implementing application program standard structure for a specific operating system. That is, the application framework 320 manages the life cycle of the application and is responsible for processing events and controlling applications. Here, the application framework 320 includes an alarm manager 325 for alarming the update period synchronization of the application.

The system library 330 is a set of the data sets and files retaining the parts of the operating system. Here, the system library 330 includes a synchronization scheduler 335 for synchronizing the update periods of the applications running on the application layer 310.

The kernel 340 is responsible for interrupt processing, process management, memory management, system management, programming interface, and basic functions of the operating system. Accordingly, the kernel 340 is loaded onto the memory to which normal access is prohibited. That is, the kernel 340 can be seen as an application for controlling hardware.

The application layer 310 first requests the alarm manager 325 of the application framework 320 for synchronization period registration to the application 315 in step 350. The alarm manager 325 requests the synchronization scheduler 335 to add the alarm to the alarm list in step 355. This process is repeated, as denoted by reference number 357, whenever an application is registered.

The synchronization scheduler 335 calculates the scheduling synchronization period of the corresponding application through the optimal synchronization calculator 360 and adds the calculated scheduling synchronization period to the alarm list 365 in step 363.

In step 367, the synchronization scheduler 335 checks the scheduling synchronization period stored in the alarm list and then the alarm period for alarming the update to the application layer 310 through the alarm processor 370. If the alarm period arrives, the synchronization scheduler 335 notifies the application layer 310 of the scheduling synchronization period of the application in step 375.

FIG. 4 is a diagram illustrating an alarm list for use in an application management method according to an embodiment of the present invention.

Referring to FIG. 4, the alarm list stored in the storage unit 230 sorts the scheduling synchronization periods by application. The information on each scheduling synchronization period includes a type 415, a start time (when) 417, a scheduling synchronization period (Repeat Interval) 419, etc. Here, the type 415 includes information on a method for configuring the alarm for alarming the update period, i.e., whether to configure with absolute time (or Coordinated Universal Time (UTC)) or relative time (e.g., 5 minutes or 10 minutes after). The type 415 for use in the terminal is represented by ELAPSED_REALTIME_WAKEUP and RTC_WAKEUP, where ELAPSED_REALTIME_WAKEUP is information for determining the alarm trigger time based on the system clock of the terminal such that the alarm time is judged by the current time, and RTC_WAKEUP is the information for determining the alarm trigger time based on the time acquired from the network such that the alarm time is judged by the absolute time.

The start time 417 denotes the time of the initial update, after the registration of the application. The scheduling synchronization period 419 is the information on the update interval of the corresponding application and configured based on the basic synchronization unit set for synchronization with the update period of other applications.

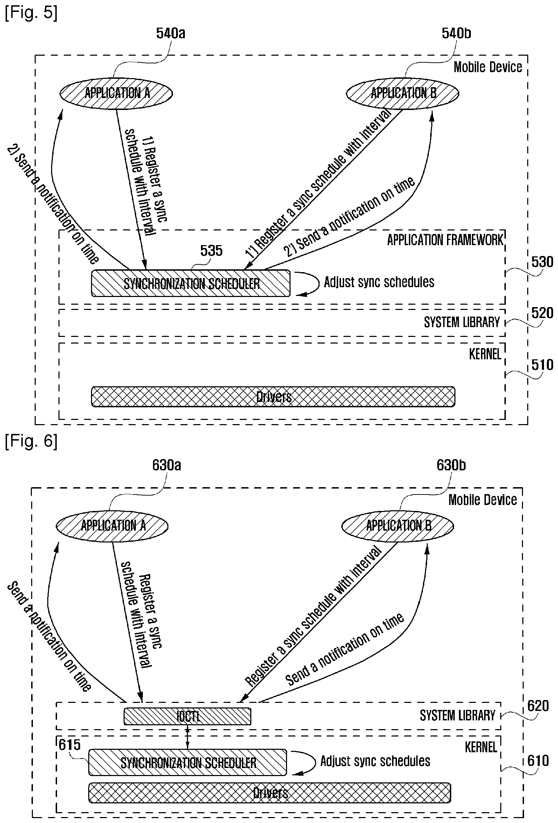

FIG. 5 is a diagram illustrating a first location of a scheduler on an OS layer of a control unit of a terminal according to an embodiment of the present invention.

Referring to FIG. 5, a synchronization scheduler 535 is positioned on an application framework 530 among a kernel 510, a system library 520, and the application framework 530. Accordingly, the update periods of an application A 540a and an application B 540b are synchronized by the synchronization scheduler 535 located on the application framework 530. The synchronization scheduler 530 issues an alarm to trigger the updates of the application A 540a and the application B 540b at the corresponding update times according to the scheduling synchronization period.

FIG. 6 is a diagram illustrating a second location of a scheduler on an OS layer of a control unit of a terminal according to an embodiment of the present invention.

Referring to FIG. 6, a synchronization scheduler 615 can be positioned on a kernel 610 among the kernel 610 and a system library 620. An update period synchronization request for an application A 640a and an application B 640b is transferred to the synchronization scheduler on the kernel 610 via the system library 620. The update periods of the application A 640a and the application B 640b are synchronized by the synchronization scheduler located on the kernel 610. The synchronization scheduler 615 generates an alarm triggering updates of the application A 640a and the application B 640b through the system library 620 at the corresponding update time according to the scheduling synchronization period.

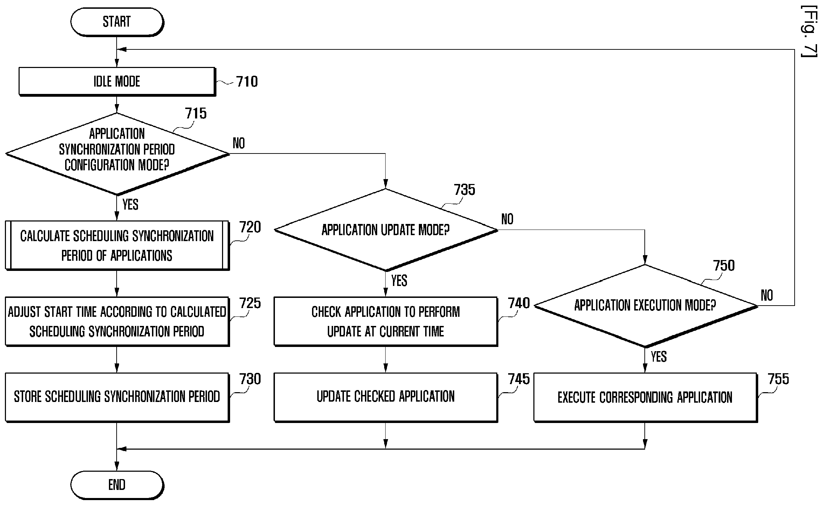

FIG. 7 is a flowchart illustrating an application management method according to an embodiment of the present invention.

Referring to FIG. 7, a terminal is in an idle mode in step 710 and monitors for a request for an application synchronization period configuration mode in step 715. Here, the application synchronization period configuration mode is activated when the registration of an application requiring periodic data update is requested or when update period reset menu is selected on a preference settings of an installed application.

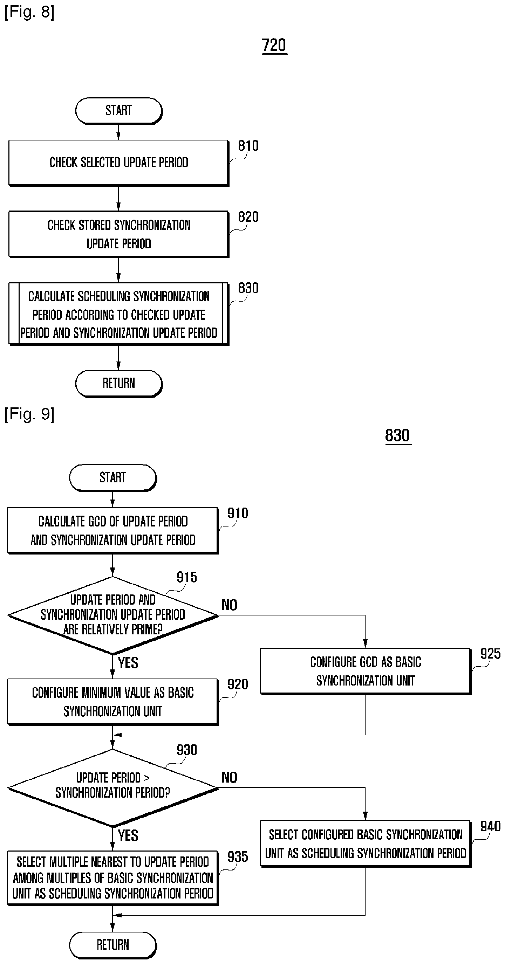

If the application synchronization configuration mode is selected, the terminal calculates the scheduling synchronization period according to the applications in step 720. Basically, the terminal compares the previously stored synchronization update period according to the update period of the application with the update period of the application selected in the application synchronization period configuration mode to calculate the greatest common divisor. The terminal synchronizes the update period of the selected application with the update period of the other applications using the calculated greatest common divisor. This operation will be described in more detail below with reference to FIGs. 8 and 9.

In step 725, the terminal changes the start time of the update of the application for the new start time determined according to the calculated scheduling synchronization period. That is, the terminal controls such that the update start time of the selected application is synchronized to that of the other applications of which update periods have been synchronized already. The terminal then stores the scheduling synchronization period of the selected application in step 730.

If the application synchronization configuration mode is not selected in step 715, the terminal determines whether an application update mode is selected in step 735. That is, the terminal determines whether there is an update scheduled at current time.

When the application update mode is selected, the terminal checks at least one application to be updated at the current time in step 740. In step 745, the terminal updates the checked applications. That is, the terminal requests the connected network for data to execute the application and stores the data received form the network. Next, the terminal displays the stored data or performs the corresponding function in execution of the corresponding application.

When the application update mode is not selected in step 735, the terminal determines whether an application execution mode is selected in step 750. If the application execution mode is selected, the terminal executes the corresponding application in step 755. If the application execution mode is not selected, the terminal remains in the idle mode in step 710

As described above, a terminal in accordance with an embodiment of the present invention is capable of synchronizing update periods of applications installed therein. Because the applications perform updates at the synchronized update period, it is possible to regulate the transitions between the idle and the active mode, thereby minimizing power consumption.

FIG. 8 is a flowchart illustrating a scheduling synchronization period calculation procedure of an application management method according to an embodiment of the present invention.

Referring to FIG. 8, a terminal checks an update period selected by a user in step 810. In step 820, the terminal checks the previously stored synchronization update period according to the update periods of all of the applications running on the terminal. In step 830, the terminal calculates the scheduling synchronization period according to the checked updated period and synchronization update period. The scheduling synchronization period calculation step will be described in more detail hereinafter with reference to FIG. 9.

FIG. 9 is a flowchart illustrating a procedure for application synchronization period configuration of an application management method according to an embodiment of the present invention.

Referring to FIG. 9, a terminal calculates a greatest common divisor of an update period of an application selected for registration and a previously stored synchronization update period in step 910. That is, whenever an application requiring periodic update is registered, the terminal calculates the greatest common divisor of the updated period of the corresponding application and the previously stored synchronization update period. As described above, the synchronization update period is a basic synchronization unit calculated for synchronizing the update periods of all of the applications running on the terminal.

In step 915, the terminal determines whether the update period and the synchronization update are relatively prime. If the update period and the synchronization update are relatively prime, the terminal sets the minimum value between the update period and the synchronization period as the basic synchronization unit in step 920.

However, if the update period and the synchronization update period are not relatively prime in step 915, the terminal sets the calculated greatest common divisor as the basic synchronization in step 925.

After setting the basic synchronization unit, the terminal determines whether the update period is greater than the synchronization update period in step 930. If the update period is greater than the synchronization update period, in step 935, the terminal selects a multiple nearest to the update period, among multiples of the basic synchronization unit, as the scheduling synchronization period. The previously stored synchronization update period is changed for the basic synchronization unit.

However, if the update period is less than or equal to the synchronization update period in step 930, the terminal selects the basic synchronization unit as the scheduling synchronization period in step 940. That is, the terminal changes the scheduling synchronization period of the registered applications for the configured basic synchronization unit. The update period of the applications registered with the terminal is changed for the multiple nearest to the synchronization update period among the multiples of the basic synchronization unit, and the previously stored synchronization update period is changed for the basic synchronization unit.

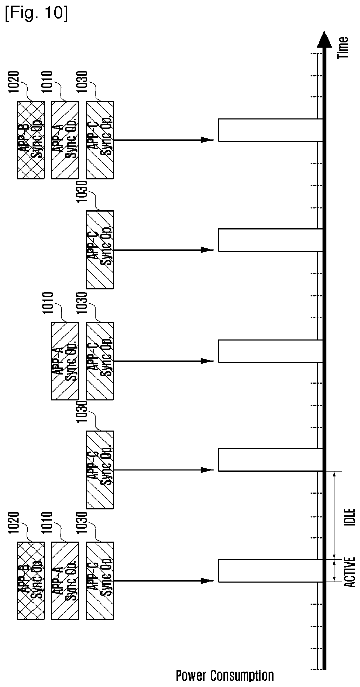

FIG. 10 is a diagram illustrating a principle of updates based on a scheduling synchronization period configuration per application according to an embodiment of the present invention.

Referring to FIG. 10, an update period of an application A 1010 is 10 minutes, an update period of an application B 1020 is 20 minutes, and an update period of an application C 1030 is 5 minutes. However, the start times of the application A 1010, application 1020 B, and application 1030 C are adjusted such that these applications simultaneously start their updates. The application A 101, application B 1020, and application C 1030 perform updating at a scheduling update period as scheduled.

Again, the application A 1010 performs updates at intervals of 10 minutes, the application B 1020 at intervals of 20 minutes, and the application C 1030 at intervals of 5 minutes. Because the application A 1010, application B 1020, and application C 1030 are synchronized in a basic synchronization unit of 5 minutes, all of the application A 1010, application B 1020, and application C 1030 perform updates at the initial start time. The application C 1030, which has the shortest synchronization period starts updating again after 5 minutes elapses, at its next interval time. Five minutes later, i.e., 10 minutes after the initial start time, the applications A and C 1010 and 1030 perform updates simultaneously. The application C 1030 then performs another update 5 minutes later.

The applications A, B, and C 1010, 1020, and 1030, then simultaneously perform updates five minutes later, i.e., 20 minutes after the initial start time.

As illustrated in FIG. 10, a terminal in accordance with an embodiment of the present invention is capable of regulating the timing transitioning from the idle mode to the active mode or vice versa.

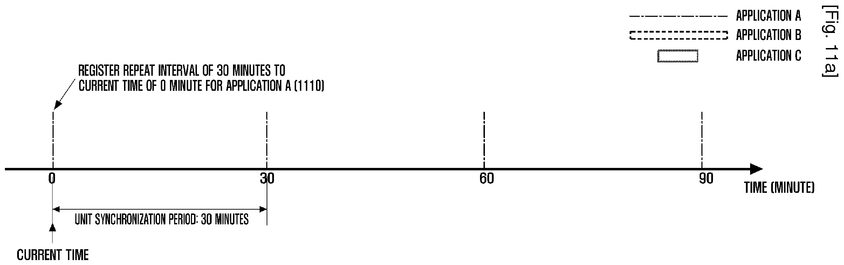

FIGs. 11A to 11C are diagrams illustrating an application synchronization procedure according to an embodiment of the present invention. Specifically, in FIGs. 11A to 11C, a control unit registers the scheduled execution time with the system in the form of an alarm or a similar form in order to perform the synchronization operation of each application on the background. Further, the times are expressed as relative times to the current time (0 minute) of FIG. 11A.

Referring to FIG. 11A, application A is configured to perform a synchronization operation at 30 minute intervals. The control unit sets the alarm interval for application A to 30 minutes later, based on the current time (0 minute), and registers the alarm. Thereafter, unless there is a change, the alarm for application A to perform synchronization will be activated at 30 minutes, 60 minutes, 90 minutes, etc., . However, registration of another application may influence the synchronization periods of application A.

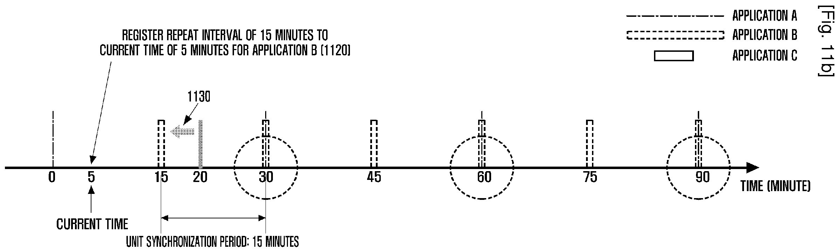

Referring to FIG. 11B, application B is configured to perform a synchronization operation at 15 minute intervals. Accordingly, when application B is registered at 5 minutes, the control unit sets the alarm interval for the application A to 15 minutes in relation to the current time (0 minute) of application A, not 5 minutes, and registers the alarm. If the application A is not considered, the synchronization operation of the application B would be performed at 5 minutes, 30 minutes, 35 minutes, etc., from the current time (0 minute) of FIG. 11A.

However, in accordance with an embodiment of the present invention, 15 minutes is the greatest common divisor of the synchronization period of the application A (30 minutes) and the synchronization period of the application B (15 minutes) and becomes the unit synchronization period. This period can be expressed as common synchronization period, which is applied commonly. Similarly, the synchronization timing at which an application is synchronized according to the unit synchronization period can be expressed as common synchronization timing.

According to the conventional method, the alarm of application B would be issued at 20 minutes elapsed time after 15 minutes from the 5 minutes elapsed time. However, according to this embodiment, the first alarm timing is changed from 20 minutes elapsed time to the 15 minutes elapsed time as denoted by reference number 1130.

While FIG. 11B illustrates the initial synchronization timing of application be adjusted to 15 minutes from 20 minutes, because the 5 minute difference is shorter than the 10 minute difference between 30 minutes, i.e., the next available synchronization timing, and 20 minutes, it is also possible to set the initial synchronization timing for application B to 30 minutes.

Alternatively, the change of the synchronization timing for the newly added application can be performed after the initial synchronization period passes. For example, the initial synchronization of the application B is executed at 20 minutes, but then the second synchronization timing is changed from the 35 minutes, i.e., 15 minutes later, to the 30 minutes elapsed time to be synchronized with application A. According to this alternative embodiment, the original synchronization timing is maintained when there is no actual gain of the synchronization timing change but changed when there is the gain of the synchronization timing change.

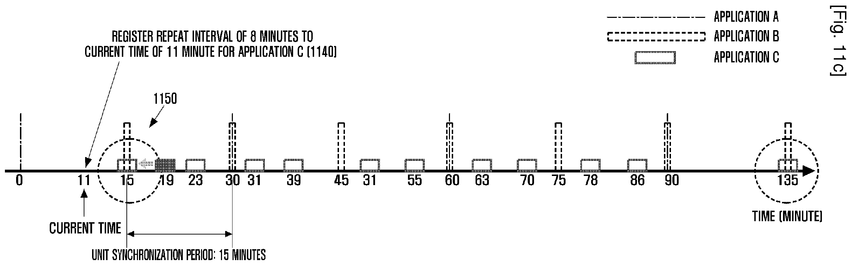

Referring to FIG. 11C, application C is configured to perform a synchronization operation at 8 minute intervals. The control unit sets the alarm interval for the application C to 8 minutes at the current time (11 minutes elapsed time) and registers the alarm as denoted by reference number 1140.

According to the conventional method, the first alarm generation timing of the application C would be at 19 minutes elapsed time. The 15 minutes elapsed time as the previous unit synchronization 15 before the time point as denoted by reference number 1140 and the 8 minutes elapsed time as the synchronization period of the application C are relatively prime. In accordance with an embodiment of the present invention, if the original unit synchronization period and the synchronization period of the newly added application are relatively prime, both the unit synchronization period and the synchronization period of the newly added application are maintained. However, the first synchronization timing of the application C is changed by referencing the synchronization timing according to the conventional unit synchronization period.

According to the conventional method, the application C would perform initial synchronization at 19 minutes elapsed time. However, according to this embodiment, the first synchronization timing of the application C is changed for the 15 minutes elapsed time. However, because the unit synchronization period and the synchronization period of application C are not changed, the two synchronizations are not simultaneously performed again until 135 minutes have elapsed. However, because changing the synchronization period semi-persistently may be opposed to the feature of application, the synchronization period is not changed in this embodiment. Due to the change of the first synchronization timing of the application C, the other applications may perform the synchronization at every 120 minutes at the same timing.

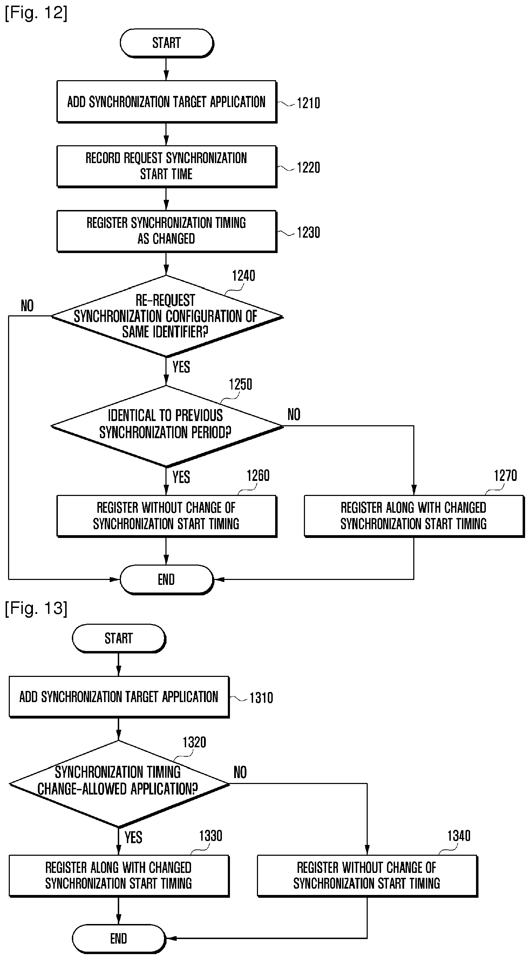

FIG. 12 is a flowchart illustrating a synchronization configuration procedure of an application management method according to an embodiment of the present invention.

Referring to FIG. 12, a synchronization target application is added in step 1210. For example, if the user configures synchronization of a specific application or a new application requiring synchronization is installed, a synchronization target application is added. In step 1220, the terminal records the initial synchronization timing (start time) requested by the application. The terminal adjusts the initial synchronization timing as described above with reference to FIGs. 2 to 11C.

In step 1240, the terminal determines whether the synchronization configuration is requested with the same identifier (or by the same application). If the synchronization configuration is not requested with the same identifier, the terminal ends the synchronization procedure and performs the synchronization at the period determined according to the application and the changed synchronization timing.

However, if the synchronization configuration is requested with the same identifier in step 1240, the terminal determines whether the start time of the new synchronization configuration is identical with the start time of the previous synchronization configuration in step 1250.

If the two start times are identical with each other, the terminals maintain the start time of the synchronization start time as the application has requested without change in step 1260.

For example, if the corresponding application requests for the alarm set to 20 minutes elapsed time from the start time and the terminal adjusts the start time of the synchronization is adjusted to the 15 minutes elapsed time, the corresponding application receives the alarm at the 15 minutes elapsed time. However, because the corresponding application wants to receive alarm at the 20 minutes elapsed time, it resets the synchronization start time to the 20 minutes elapsed time again and requests for start of the synchronization. In this case, because the start time of the new synchronization configuration becomes identical with the start time of the previous synchronization configuration which is recorded at step 1220, the terminal maintains the start time of the synchronization start time as the application has requested without change.

If the start time of the new synchronization configuration is not identical with the start time of the previous synchronization configuration which has been recorded in step 1220, the terminal changes and registers the synchronization start time, e.g., as described above with reference to FIGs. 2 to 11C and then performs synchronization, in step 1270.

The terminal is capable of retaining the synchronization alarm identifiers (or corresponding application identifiers) in the form a list for performing synchronization without changing the synchronization start time in such a way. Afterward, if the synchronization alarm request for the corresponding identifier is detected, the terminal maintains the alarm start time without change.

FIG. 13 is a flowchart illustrating a synchronization configuration procedure of an application management method according to an embodiment of the present invention.

Referring to FIG. 13, a synchronization target application is added in step 1310. For example, if the user configures synchronization of a specific application or a new application requiring synchronization is installed, a synchronization target application is added.

In step 1320, the terminal determines whether the corresponding application is the application allowing for synchronization timing change. The applications allowing for synchronization timing change or not can be discriminated among each other in various ways.

For example, the storage unit 230 can store a list of the applications allowed for the synchronization timing change, i.e., a white list. In this case, the control unit 220 is capable of performing the synchronization timing adjustment according to the procedure described with reference to FIGs. 2 to 11C when the application added as the synchronization target is included in the white list.

The storage unit 230 is also capable of storing a list of applications not allowed for the synchronization timing change, i.e., a black list. In this case, the control unit 220 is capable of performing the synchronization timing adjustment according to the procedure described with reference to FIGs. 2 to 11C when the application added as the synchronization target is not included in the black list.

The black list and/or the white list can be configured by the user. The user can manage the applications included in the black list and/or white list using normal expression states or by inputting the identifiers and names of the application to be included in the black list and/or white list and other information. The user may include the applications requiring the periodic traffic and synchronization in the white list to adjust the synchronization timings efficiently. Likewise, the user may include the applications that do not require the periodic traffic and synchronization in the black list to adjust the synchronization timing efficiently.

According to another embodiment of the present invention, the control unit 220 includes an application registered with an account manager or a synchronization manager of the OS of the terminal in the white list. The applications registered with the account manager or the synchronization manager is register alarms without providing the control unit 220 with the period information. However, most of the applications registered with the account manager or the synchronization manager perform synchronization procedures periodically. In this case, the actual period can be the time from the registration time of the alarm to the start time of the alarm. The control unit 220 estimates the period in this manner and adjusts the alarm timing as described with reference to FIGs. 2 to 11C.

According to another embodiment of the present invention, the control unit 220 provides a list of applications installed or a list of the currently running application on a display unit. The user selects the applications to be included in the black list or the white list using an input device. In order to help the user's selection, the control unit 220 is capable of displaying the applications periodically generating traffic and the applications generating more traffic than a predetermined threshold amount on the background, in order to distinguish these applications from other applications.

According to another embodiment of the present invention, the terminal receives the black list and/or the white list from an external entity through the communication unit. For example, the black list and/or the white list stored in the external entity can be managed by the operator.

According to the above-described embodiments, if it is determined to change the synchronization timing and/or period of the application, the control unit 220 provides an interface through which a user determines whether to change the synchronization timing and/or period. For example, if it is determined to change the synchronization timing and/or period of the application, the control unit 220 displays a notification message "it is possible to save system power by changing the synchronization period of the application from a minute elapsed time to b minute elapsed time. Would you like to change? (y/n)" and changing the synchronization timing and/or period of the application or not according to the user input.

According to another embodiment of the present invention, the control unit 220 sorts applications into groups according to synchronization periods of the applications. For example, the applications having the synchronization periods of multiples of 7 (i.e. 7, 14, 21, 28, ...) are sorted into the group 7. The applications having the synchronization periods of multiples of 5 (i.e., 5, 10, 15, 20, ...) are sorted into the group 5. Each group is represented by the shortest synchronization period in the group. The shortest synchronization period is a prime. For example, there can be the groups 2, 3, 5, 7, 11, 13, 17, etc., If the synchronization period is 6, it can be logically sorted into both the group 2 and the group 3.

According to an embodiment of the present invention, however, a certain period can be sorted into only one group according to a predetermined rule. For example, the period of 6 minutes is sorted into the group 3, and the period of 35 minutes is sorted into the group 7. The predetermined rule specifies the primary group, which a certain period is sorted into.

According to another embodiment of the present invention, the predetermined rule can be of predetermining the priorities of the groups such that an application having a certain period is sorted into the group assigned the highest priority. For example, if the priority of the group 7 is higher than the priority of the group 5, the application having the priority of 35 minutes is sorted into group 7. The periods of the applications sorted into the same group are adjusted to match with each other according to the procedures described with reference to FIGs. 2 to 10. For applications sorted into another group, the synchronization periods can be adjusted to match with each other once at the first timing according to the embodiment of FIG. 11C.

As described above, the application management method of present invention adjusts synchronization start times and periods of applications having different synchronization periods to match with each other, thereby minimizing the number of transitions between idle mode and active mode, and reducing power consumption.

While the present invention has been particularly shown and described with reference to certain embodiments thereof, it will be understood by those of ordinary skill in the art that various changes in form and details may be made therein without departing from the scope of the present invention as defined by the following claims.

## Claims

1. An application synchronization method of a terminal, the application synchronization method comprising:

   acquiring a synchronization period timing of a new application, if the new application is registered for synchronization;
   acquiring synchronization timings and synchronization period for each previously registered application for synchronization;
   identifying an earliest synchronization timing, which will occur after registration of the new application, for each previously registered application;
   selecting one earliest synchronization timing based on the synchronization period of the new application and the synchronization period of each previously registered application, wherein the selected earliest synchronization timing is within a first synchronization period of the new application; and
   setting a first occurring synchronization timing of the new application to the selected earliest synchronization timing.

2. The application synchronization method of claim 1, further comprising:
   determining whether the synchronization timing of the new application is changeable.

3. A terminal for performing application synchronization, comprising:

   a memory; and
   a controller configured to:

   acquire a synchronization period of a new application, if the new application is registered for synchronization,
   acquire synchronization timings and a synchronization period for each previously registered application for synchronization,
   identify an earliest synchronization timing, which will occur after registration of the new application, timings for each previously registered application,
select one earliest synchronization timing based on the synchronization period of the new application and the synchronization period of each previously registered application, and
set a first occurring synchronization timing of the new application to the selected earliest synchronization timing.

**4.** The terminal of claim 3, wherein the controller is further configured to determine whether the synchronization timing of the new application is changeable.

**Patentansprüche**

**1.** Anwendungssynchronisationsverfahren eines Endgeräts, wobei das Anwendungssynchronisationsverfahren Folgendes umfasst:

Erfassen eines zeitlich festgelegten Synchronisationszeitraums einer neuen Anwendung, wenn die neue Anwendung für die Synchronisation registriert ist;
Erfassen von Synchronisationszeitpunkten und Synchronisationszeitraum für jede zuvor registrierte Anwendung zur Synchronisation;
Identifizieren eines frühesten Synchronisationszeitpunkts, der nach der Registrierung der neuen Anwendung auftritt, für jede zuvor registrierte Anwendung;
Auswählen eines frühesten Synchronisationszeitpunkts basierend auf dem Synchronisationszeitraum der neuen Anwendung und dem Synchronisationszeitraum jeder zuvor registrierten Anwendung, wobei der ausgewählte früheste Synchronisationszeitpunkt innerhalb eines ersten Synchronisationszeitraums der neuen Anwendung liegt; und
Festlegen eines zuerst auftretenden Synchronisationszeitpunkts der neuen Anwendung auf den ausgewählten frühesten Synchronisationszeitpunkt.

**2.** Anwendungssynchronisationsverfahren nach Anspruch 1, das des Weiteren Folgendes umfasst: Bestimmen, ob der Synchronisationszeitpunkt der neuen Anwendung veränderbar ist.

**3.** Endgerät zum Durchführen einer Anwendungssynchronisation, umfassend:

einen Speicher; und
eine Steuerung, die für Folgendes konfiguriert ist:

Erfassen eines Synchronisationszeitraums einer neuen Anwendung, wenn die neue Anwendung für die Synchronisation registriert ist,
Erfassen von Synchronisationszeitpunkten und eines Synchronisationszeitraums für jede zuvor registrierte Anwendung zur Synchronisation,
Identifizieren eines frühesten Synchronisationszeitpunkts, der nach der Registrierung der neuen Anwendung auftritt, Zeitpunkte für jede zuvor registrierte Anwendung,
Auswählen eines frühesten Synchronisationszeitpunkts basierend auf dem Synchronisationszeitraum der neuen Anwendung und dem Synchronisationszeitraum jeder zuvor registrierten Anwendung, und
Festlegen eines zuerst auftretenden Synchronisationszeitpunkts der neuen Anwendung auf den ausgewählten frühesten Synchronisationszeitpunkt.

**4.** Endgerät nach Anspruch 3, wobei die Steuerung des Weiteren konfiguriert ist, um zu bestimmen, ob der Synchronisationszeitpunkt der neuen Anwendung veränderbar ist.

**Revendications**

**1.** Procédé de synchronisation d'application d'un terminal, le procédé de synchronisation d'application comprenant :

acquérir un temps de période de synchronisation d'une nouvelle application, si la nouvelle application est enregistrée pour une synchronisation ;
acquérir des temps de synchronisation et une période de synchronisation pour chaque application précédemment enregistrée pour une synchronisation ;

identifier un temps de synchronisation le plus antérieur, qui aura lieu après l'enregistrement de la nouvelle application, pour chaque application précédemment enregistrée ;

sélectionner un temps de synchronisation le plus antérieur sur la base de la période de synchronisation de la nouvelle application et de la période de synchronisation de chaque application précédemment enregistrée, où le temps de synchronisation le plus antérieur sélectionné est dans une première période de synchronisation de la nouvelle application ; et

définir un premier temps de synchronisation survenue de la nouvelle application pour le temps de synchronisation le plus antérieur sélectionné.

2. Procédé de synchronisation d'application selon la revendication 1, comprenant en outre :
déterminer si le temps de synchronisation de la nouvelle application est modifiable.

3. Terminal pour effectuer une synchronisation d'application, comprenant :

une mémoire ; et
un contrôleur configuré pour :

acquérir une période de synchronisation d'une nouvelle application, si la nouvelle application est enregistrée pour une synchronisation,

acquérir des temps de synchronisation et une période de synchronisation pour chaque application précédemment enregistrée pour une synchronisation, identifier un temps de synchronisation le plus antérieur, qui aura lieu après l'enregistrement des temps de la nouvelle application pour chaque application précédemment enregistrée,

sélectionner un temps de synchronisation le plus antérieur sur la base de la période de synchronisation de la nouvelle application et de la période de synchronisation de chaque application précédemment enregistrée, et

définir le temps de synchronisation le plus antérieur sélectionné en tant qu'un premier temps de synchronisation survenue de la nouvelle application.

4. Terminal selon la revendication 3, où le contrôleur est configuré en outre pour déterminer si le temps de synchronisation de la nouvelle application est modifiable.

[Fig. 1]

Power Consumption

[Fig. 2]

[Fig. 3]

SYNCHRONIZATION PERIOD REGISTRATION REQUEST

REQUEST FOR ADDING ALARM TO ALARM LIST

ACTION_PACKAGE_REMOVED
ACTION_PACKAGE_RESTARTED

315

325

335

APPLICATION

350

ALARM MANAGER

355

REPEAT 360

363

OPTIMAL SYNCHRONIZATION CALCULATOR

ADD TO ALARM LIST

357

365

DELETE REGISTERED ALARMS

DELETION RECEIVER

370

ALARM PROCESSOR

CHECK ALARM LIST

ALARM LIST

REGISTER ALARM BY ALLOCATION PERIOD

367

REGISTER ALARM BY 1 MINUTE

OPERATION TIME ADJUSTMENT RECEIVER

375

SYNCHRONIZATION PERIOD NOTIFICATION

SYNCHRONIZATION SCHEDULER

ACTION_TIME_TICK

ACTION_DATE_CHANGED

APPLICATION

APPLICATION FRAMEWORK

SYSTEM LIBRARY

KERNEL

310

320

330

340

[Fig. 4]

A
B
C
410 — D
.
.
.
J
K
L
M

415  417  419

TYPE | START TIME | SCHEDULING SYNCHRONIZATION PERIOD | ...

[Fig. 5]

540a — APPLICATION A
540b — APPLICATION B
Mobile Device

1) Register a sync schedule with interval
1') Register a sync schedule with interval
2) Send a notification on time
2') Send a notification on time

APPLICATION FRAMEWORK

535 — SYNCHRONIZATION SCHEDULER — Adjust sync schedules — 530

SYSTEM LIBRARY — 520

KERNEL — 510

Drivers

[Fig. 6]

630a — APPLICATION A
630b — APPLICATION B
Mobile Device

Register a sync schedule with interval
Register a sync schedule with interval
Send a notification on time
Send a notification on time

IOCTL — SYSTEM LIBRARY — 620

615 — SYNCHRONIZATION SCHEDULER — Adjust sync schedules — KERNEL — 610

Drivers

[Fig. 7]

START

710 IDLE MODE

715 APPLICATION SYNCHRONIZATION PERIOD CONFIGURATION MODE?

720 CALCULATE SCHEDULING SYNCHRONIZATION PERIOD OF APPLICATIONS

725 ADJUST START TIME ACCORDING TO CALCULATED SCHEDULING SYNCHRONIZATION PERIOD

730 STORE SCHEDULING SYNCHRONIZATION PERIOD

735 APPLICATION UPDATE MODE?

740 CHECK APPLICATION TO PERFORM UPDATE AT CURRENT TIME

745 UPDATE CHECKED APPLICATION

750 APPLICATION EXECUTION MODE?

755 EXECUTE CORRESPONDING APPLICATION

END

[Fig. 8]

720

```
            START
              │
              ▼
┌─────────────────────────────┐  810
│  CHECK SELECTED UPDATE PERIOD │
└─────────────────────────────┘
              │
              ▼
┌─────────────────────────────┐  820
│   CHECK STORED SYNCHRONIZATION│
│         UPDATE PERIOD         │
└─────────────────────────────┘
              │
              ▼
┌─────────────────────────────┐  830
│ CALCULATE SCHEDULING SYNCHRONIZATION│
│  PERIOD ACCORDING TO CHECKED UPDATE │
│ PERIOD AND SYNCHRONIZATION UPDATE PERIOD│
└─────────────────────────────┘
              │
              ▼
           RETURN
```

[Fig. 9]

830

```
                      START
                        │
                        ▼
        ┌──────────────────────────────┐  910
        │  CALCULATE GCD OF UPDATE PERIOD│
        │ AND SYNCHRONIZATION UPDATE PERIOD│
        └──────────────────────────────┘
                        │
                        ▼
              ◇ 915                          NO
         UPDATE PERIOD AND ──────────────────────────┐
      SYNCHRONIZATION UPDATE PERIOD                   │
         ARE RELATIVELY PRIME?                        ▼
                        │ YES            ┌──────────────────────┐  925
                        ▼                │  CONFIGURE GCD AS BASIC│
        ┌──────────────────────────┐  920│   SYNCHRONIZATION UNIT │
        │ CONFIGURE MINIMUM VALUE AS│    └──────────────────────┘
        │   BASIC SYNCHRONIZATION UNIT│            │
        └──────────────────────────┘              │
                        │ ◄───────────────────────┘
                        ▼
              ◇ 930
         UPDATE PERIOD >  ─────────── NO ──────────┐
       SYNCHRONIZATION PERIOD?                      │
                        │ YES                        ▼
                        ▼              ┌──────────────────────────────┐  940
┌──────────────────────────────┐  935 │ SELECT CONFIGURED BASIC SYNCHRONIZATION│
│SELECT MULTIPLE NEAREST TO UPDATE PERIOD│  │ UNIT AS SCHEDULING SYNCHRONIZATION PERIOD│
│AMONG MULTIPLES OF BASIC SYNCHRONIZATION│  └──────────────────────────────┘
│UNIT AS SCHEDULING SYNCHRONIZATION PERIOD│        │
└──────────────────────────────┘               │
                        │ ◄────────────────────┘
                        ▼
                    RETURN
```

[Fig. 10]

[Fig. 11a]

APPLICATION A
APPLICATION B
APPLICATION C

REGISTER REPEAT INTERVAL OF 30 MINUTES TO
CURRENT TIME OF 0 MINUTE FOR APPLICATION A (1110)

0          30          60          90          TIME (MINUTE)

UNIT SYNCHRONIZATION PERIOD: 30 MINUTES

CURRENT TIME

[Fig. 11b]

APPLICATION A
APPLICATION B
APPLICATION C

REGISTER REPEAT INTERVAL OF 15 MINUTES TO
CURRENT TIME OF 5 MINUTES FOR APPLICATION B (1120)

1130

0    5    15   20   30        45        60        75        90
TIME (MINUTE)

CURRENT TIME

UNIT SYNCHRONIZATION PERIOD: 15 MINUTES

[Fig. 11c]

REGISTER REPEAT INTERVAL OF 8 MINUTES TO
CURRENT TIME OF 11 MINUTE FOR APPLICATION C (1140)

APPLICATION A
APPLICATION B
APPLICATION C

1150

0   11   15   19   23   30 31   39   45   31   55   60 63   70 75   78   86 90   135

CURRENT TIME

UNIT SYNCHRONIZATION PERIOD: 15 MINUTES

TIME (MINUTE)

[Fig. 12]

```
                    ┌─────────┐
                    │  START  │
                    └────┬────┘
                         │
          ┌──────────────▼──────────────┐
          │ ADD SYNCHRONIZATION TARGET  │────1210
          │        APPLICATION          │
          └──────────────┬──────────────┘
                         │
          ┌──────────────▼──────────────┐
          │   RECORD REQUEST            │────1220
          │  SYNCHRONIZATION START TIME │
          └──────────────┬──────────────┘
                         │
          ┌──────────────▼──────────────┐
          │  REGISTER SYNCHRONIZATION   │────1230
          │    TIMING AS CHANGED        │
          └──────────────┬──────────────┘
                         │
                    1240 │
          NO       ◇─────▼─────◇
      ◄──────────  RE-REQUEST
              SYNCHRONIZATION CONFIGURATION OF
                    SAME IDENTIFIER?
                         │
                        YES
                    1250 │
          NO       ◇─────▼─────◇
      ──────────►  IDENTICAL TO PREVIOUS
                  SYNCHRONIZATION PERIOD?
                         │
                        YES        1260              1270
          ┌──────────────▼──────────────┐  ┌──────────────────────────┐
          │ REGISTER WITHOUT CHANGE OF  │  │ REGISTER ALONG WITH      │
          │ SYNCHRONIZATION START TIMING│  │ CHANGED SYNCHRONIZATION  │
          │                             │  │      START TIMING        │
          └──────────────┬──────────────┘  └────────────┬─────────────┘
                         │                               │
                    ┌────▼────┐                          │
                    │   END   │◄─────────────────────────┘
                    └─────────┘
```

[Fig. 13]

```
                    ┌─────────┐
                    │  START  │
                    └────┬────┘
                         │
          ┌──────────────▼──────────────┐
          │ ADD SYNCHRONIZATION TARGET  │────1310
          │        APPLICATION          │
          └──────────────┬──────────────┘
                         │
                    1320 │
                    ◇────▼────◇          NO
              SYNCHRONIZATION TIMING  ──────────►
             CHANGE-ALLOWED APPLICATION?
                         │
                        YES    1330                      1340
          ┌──────────────▼──────────────┐  ┌──────────────────────────┐
          │ REGISTER ALONG WITH CHANGED │  │ REGISTER WITHOUT CHANGE  │
          │ SYNCHRONIZATION START TIMING│  │ OF SYNCHRONIZATION       │
          │                             │  │      START TIMING        │
          └──────────────┬──────────────┘  └────────────┬─────────────┘
                         │                               │
                    ┌────▼────┐                          │
                    │   END   │◄─────────────────────────┘
                    └─────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011234427 A1
- EP 2154922 A1
- US 2011161963 A1
- WO 2010022945 A2
- US 2003153368 A1